# EUROPÄISCHE PATENTSCHRIFT

(11) **EP 1 668 942 B1**
(45) Veröffentlichungstag und Bekanntmachung des Hinweises auf die Patenterteilung: **25.03.2009**
(21) Anmeldenummer: 04766263.0
(22) Anmeldetag: 19.07.2004
(51) Int. Cl.: H04W 64/00

(54) **VERFAHREN ZUR POSITIONSSCHÄTZUNG EINER TEILNEHMERSTATION EINES FUNKKOMMUNIKATIONSSYSTEMS SOWIE NETZEINRICHTUNG**
METHOD FOR ESTIMATING THE POSITION OF A SUBSCRIBER STATION OF A RADIO COMMUNICATION SYSTEM AND NETWORK DEVICE
PROCEDE D'EVALUATION DE POSITION D'UNE STATION D'ABONNE D'UN SYSTEME DE COMMUNICATION RADIO ET DISPOSITIF RESEAU

(30) Priorität: 29.09.2003 DE 10345224
(43) Veröffentlichungstag der Anmeldung: 14.06.2006
(73) Patentinhaber: Nokia Siemens Networks GmbH & Co. KG, 81541 München (DE)
(72) Erfinder: KRANNICH, Ralf, 42579 Heiligenhaus (DE); KUIPERS, Martin, 13599 Berlin (DE); MAJEWSKI, Kurt, 81541 München (DE)
(86) Internationale Anmeldenummer: PCT/EP2004/051544
(87) Internationale Veröffentlichungsnummer: WO 2005/034556

(56) Entgegenhaltungen:
- WO-A-01/28272
- WO-A-98/15149
- WO-A-02/082832
- DE-A- 10 056 222
- "Digital cellular telecommunications system (Phase 2+); Location Services (LCS); Functional description; Stage 2 (3GPP TS 03.71 version 7.9.0 Release 1998); ETSI TS 101 724" ETSI STANDARDS, EUROPEAN TELECOMMUNICATIONS STANDARDS INSTITUTE, SOPHIA-ANTIPO, FR, Bd. 3-SA2;SMG3, Nr. V790, März 2002 (2002-03), XP014006568 ISSN: 0000-0001

## Beschreibung

Die Erfindung betrifft ein Verfahren zur Positionsschätzung einer Teilnehmerstation eines Funkkommunikationssystems sowie eine entsprechende Netzeinrichtung.

Die Lokalisierung von Teilnehmerstationen in zellularen Netzen hat in der letzten Zeit zunehmend an Bedeutung gewonnen. Zum einen gibt es in einigen Ländern gesetzliche Regelungen, welche die Netzbetreiber zur Standortbestimmung von Notrufen gesetzlich verpflichten. Zum anderen findet zur Zeit eine Kommerzialisierung von standortbezogenen Diensten statt, die eine einfache und kostengünstige Lokalisierung von Teilnehmerstationen voraussetzt. Es existiert eine Vielzahl von technischen Lösungen zur Schätzung der Position einer Teilnehmerstation, welche unterschiedliche Genauigkeiten liefern und unterschiedlichen Aufwand erfordern. Beispielsweise kann die Position einer Teilnehmerstation anhand eines EOTD- (Enhanced Observed Time Difference) Verfahrens, mittels UTDOA (Uplink Time Difference of Arrival) oder mittels AGPS (Assisted GPS) durchgeführt werden. Hierzu ist entweder die Installation von zusätzlichen Komponenten im Funkzugangsnetz oder die Verwendung spezieller Teilnehmerstationen erforderlich.

Auf der einen Seite sind viele Netzbetreiber nicht gewillt, solche Investitionen zu tätigen, auf der anderen Seite erfordern viele Anwendungen keine sehr genaue Positionsbestimmung. Es sind daher insbesondere Lokalisierungsverfahren gefragt, die kostengünstig sind und den Standort einer Teilnehmerstation mit einer vertretbaren Genauigkeit ermitteln. Die Verwendung einer Zellidentifikation (Cell ID) ist jedoch hierzu unzureichend. Erst die Hinzunahme zusätzlicher Informationen zur Zellidentifikation erlaubt die Positionierung von Teil nehmerstationen mit einer Genauigkeit, die für die meisten Anwendungen ausreichend ist. Eine Möglichkeit, zusätzlich Informationen zur Verfügung zu stellen, stellt die Auswertung von Signalstärken von einer Teilnehmerstation empfangener Signale dar. In der Regel werden Signalstärken von Empfangssignalen von der sendenden Station, die eine Funkzelle versorgt, in der sich die Teilnehmerstation befindet, sowie von weiteren sendenden Stationen benachbarter Funkzellen verwendet. Beispielsweise berichtet in GSM-Systemen (GSM: Global System for Mobile Communications) jede aktive Mobilstation alle 480 ms über die Signalstärke von Empfangssignalen der sie versorgenden Basisstation und über die Signalstärken von weiteren Empfangssignalen von bis zu sechs Nachbarbasisstationen. Diese Berichte werden mit einer Signalstärkendatenbank verglichen, um auf diese Weise ggf. in Kombination mit der Zellidentifikation den wahrscheinlichsten Standort der Teilnehmerstation zu schätzen.

Solche Verfahren und Anordnungen sind beispielsweise aus der internationalen Patentanmeldung WO 98/15149 bekannt.

Bisher bekannte Verfahren zur Positionsschätzung von Teilnehmerstationen ergeben insbesondere dann gute Ergebnisse für die Positionsschätzung, wenn mehrere Berichte einer Teilnehmerstation über Signalstärken von Empfangssignalen gleichzeitig zur Positionsschätzung verwendet werden. Allerdings entsteht z.B. in einem GSM-System bei der Verwendung von beispielsweise 10 Berichten über Signalstärken von Empfangssignalen eine zusätzliche Verzögerung bei der Ermittlung der Positionen einer Teilnehmerstation von etwa fünf Sekunden.

Aus der DE 100 56 22 A1 ist ein Verfahren zur Verkehrslokalisierung in einem zellulären Mobilfunknetz bekannt, bei dem aus den Übergangswahrscheinlichkeiten eines Hidden-Markov-Modells und den Beobachtungswahrscheinlichkeiten eines Störmodells aus einer Sequenz von Berichten ein höchst wahrscheinlicher Pfad eines Mobilteilnehmers ermittelt werden kann. Die Berichte enthalten von dem Mobilteilnehmer gemessene Feldstärkewerte von Basisstationen. Die Berichte werden von dem Mobilteilnehmer entweder direkt an eine Recheneinheit gemeldet oder zunächst von einer Basisstation gesammelt, gegebenenfalls durch weitere Messwerte ergänzt und in Form einer Gesamtmeldung an die Recheneinheit gemeldet.

Die der Erfindung zugrunde liegende Aufgabe besteht nun darin, die Positionsschätzung hinsichtlich der Verarbeitungsgeschwindigkeit zu verbessern.

Diese Aufgabe wird durch das Verfahren und die Netzeinrichtung gemäß den unabhängigen Ansprüchen gelöst.

Vorteilhafte Ausgestaltungen und Weiterbildungen sind Gegenstand der abhängigen Ansprüche.

Bei dem erfindungsgemäßen Verfahren zur Positionsschätzung einer Teilnehmerstation eines Funkkommunikationssystems empfängt eine Empfangsstation von der Teilnehmerstation Berichte, die jeweils eine Information bezüglich einer Signalstärke eines Empfangssignals wenigstens einer sendenden Station am Ort der Teilnehmerstation enthalten. Die Berichte werden in einem Speicher einer Netzeinrichtung des Funkkommunikationssystems gespeichert und eine Positionsbestimmungseinheit berücksichtigt zumindest zwei vor einer Aufforderung zur Positionsschätzung gespeicherte Berichte zur Positionsschätzung der Teilnehmerstation.

Die Erfindung ermöglicht, dass bei Vorliegen einer Aufforderung zu einer Positionsschätzung der Teilnehmerstation unverzüglich aus dem Speicher Berichte mit Informationen bezüglich Signalstärken von Empfangssignalen gelesen und an die Positionsbestimmungseinheit geliefert werden können. Eine Positionsschätzung kann daher ohne weitere Zeitverzögerung durchgeführt werden. Eine Information bezüglich einer Signalstärke eines Empfangssignals ist beispielsweise die Signalstärke des Empfangssignals oder ein Parameter, aus dem die Signalstärke abgeleitet werden kann.

In einer bevorzugten Ausgestaltung wird als Netzeinrichtung die Empfangsstation verwendet. Die kontinuierlich gespeicherten Berichte der Teilnehmerstation von der Empfangsstation, beispielsweise der Basisstation, die die Funkzelle versorgt, in der sich die Teilnehmerstation befindet, werden beispielsweise zur Entscheidung über Verbindungswechsel (Handover) zu benachbarten Basisstationen verwendet. Eine Signalisierung der Berichte an die Positionsbestimmungseinheit erfolgt erst, wenn eine Aufforderung zur Positionsbestimmung der Teilnehmerstation vorliegt, d.h. die im Funkkommunikationssystem auftretende Signalisierungslast aufgrund der Berichte ist minimal.

Vorteilhafterweise werden die Berichte während einer aktiven Verbindung und/oder in einem Wartezustand der Teilnehmerstation in bestimmten Zeitabständen regelmäßig empfangen und gespeichert. Eine zur Positionsschätzung erforderliche Anzahl von Berichten ist aufgrund des regelmäßigen Empfangs jederzeit aus dem Speicher abrufbar.

Von Vorteil ist, wenn im Speicher maximal eine erste Anzahl von Berichten gespeichert wird. Der für Berichte verwendete Speicherplatz kann so groß gewählt werden, dass nur die erste Anzahl, beispielsweise diejenige Anzahl von Berichten, die maximal von der Positionsbestimmungseinheit für eine Positionsschätzung verwendet wird, gespeichert werden kann. Ist der Speicher voll, wird der älteste Bericht durch den nächsten von der Teilnehmerstation empfangenen Bericht ersetzt. Auf diese Weise sind bei vollem Speicher immer die aktuellsten Berichte im Speicher vorhanden.

In einer Weiterbildung der Erfindung fordert die Positionsbestimmungseinheit eine zweite Anzahl von Berichten von der Netzeinrichtung an. Dies hat den Vorteil, dass die Positionsbestimmungseinheit die zweite Anzahl je nach für die Positionsschätzung benötigter Genauigkeit festlegen kann.

Eine bevorzugte Weiterbildung der Erfindung sieht vor, dass die Netzeinrichtung, falls sie zum Zeitpunkt der Anforderung eine geringere Anzahl als die zweite Anzahl von Berichten gespeichert hat, weitere Berichte speichert bis die zweite Anzahl von Berichten gespeichert ist oder bis eine maximale Zeitdauer abgelaufen ist und entweder vor Ablauf der maximalen Zeitdauer die zweite Anzahl von Berichten oder nach Ablauf der maximalen Zeitdauer die Anzahl bis dahin gespeicherter Berichte an die Positionsbestimmungseinheit sendet, selbst wenn die Anzahl gespeicherter Berichte weiterhin geringer als die zweite Anzahl von Berichten ist.

Durch die Weiterbildung wird ermöglicht, dass spätestens nach der maximalen Zeitdauer Berichte an die Positionsbestimmungseinheit gesendet werden. Die für die Positionsschätzung benötigte Zeit ist daher ebenfalls auf einen Maximalwert begrenzt.

Vorteilhafter Weise führt die Positionsbestimmungseinheit die Positionsschätzung durch einen Vergleich der in den Berichten angegebenen Signalstärken mit einer Signalstärkendatenbank gemäß WO 98/15149 durch.

Von Vorteil ist, wenn in den Berichten zusätzlich die Sendeleistung angegeben wird, mit der die wenigstens eine sendende Station das Empfangssignal jeweils gesendet hat. Üblicherweise werden Signale auf Signalisierungskanälen, beispielsweise Rundsendekanälen, mit einer im Funkkommunikationssystem zu jeder Zeit bekannten und konstanten Sendeleistung ausgesendet und von Teilnehmerstationen empfangen. Aus der insbesondere der Positionsbestimmungseinheit bekannten Sendeleistung auf den Signalisierungskanälen und der den Berichten entnehmbaren Signalstärke des Empfangssignals kann somit bei der Positionsschätzung die Signaldämpfung berechnet und berücksichtigt werden. Dadurch, dass in den Berichten zusätzlich die Sendeleistung mit der das Empfangssignal gesendet wurde angegeben wird, kann die Signalstärke des Empfangssignal auch dann bei der Positionsschätzung berücksichtigt werden, wenn das Empfangssignal auf einem Verkehrskanal mit Sendeleistungsrege lung, d.h. auf einem Kanal mit einer ständig variierenden Sendeleistung, empfangenen wurde.

Als weitere Information zur Positionsschätzung können vorteilhafter Weise die Berichte jeweils um die Sendeleistung der Teilnehmerstation und die entsprechende Empfangsleistung an der die Berichte empfangenden Empfangsstation ergänzt werden.

Die erfindungsgemäße Netzeinrichtung weist alle erforderlichen Merkmale zur Durchführung des erfindungsgemäßen Verfahrens auf.

Die Erfindung wird im Folgenden anhand von in den Figuren dargestellten Ausführungsbeispielen näher erläutert.

Es zeigen:
- Fig. 1: eine schematische Darstellung eines Ausführungsbeispiels zur Positionsschätzung einer Teilnehmerstation eines Funkkommunikationssystems und
- Fig. 2: eine schematische Darstellung eines ersten Ablaufs der Belegung eines Speichers mit Berichten während der Durchführung des erfindungsgemäßen Verfahrens gemäß Fig. 1,
- Fig. 3: eine schematische Darstellung eines zweiten Ablaufs der Belegung eines Speichers mit Berichten während der Durchführung des erfindungsgemäßen Verfahrens gemäß Fig. 1.

Gleiche Bezugszeichen in den Figuren bezeichnen gleiche Gegenstände.

Eine Teilnehmerstation ist beispielsweise ein Mobiltelefon oder auch eine ortsbewegliche oder ortsfeste Vorrichtung zur Übertragung von Bild- und/oder Tondaten, zum Fax-, Short-Message-Service SMS- und E-Mail-Versand und zum Internetzugang.

Eine Empfangsstation ist beispielsweise eine Teilnehmerstation oder eine Basisstation. Im Folgenden wird als Empfangsstation eine Basisstation betrachtet, ohne jedoch darauf beschränkt zu sein.

Eine sendende Station ist beispielsweise eine Teilnehmerstation oder eine Basisstation. Im Folgenden wird als sendende Station eine Basisstation betrachtet, ohne jedoch darauf beschränkt zu sein.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere Mobilfunksysteme, beispielsweise nach dem GSM- oder dem UMTS-(Universal Mobile Telecommunications System) Standard. Auch zukünftige Mobilfunksysteme, beispielsweise der vierten Generation sollen unter Funkkommunikationssystemen verstanden werden.

Im Folgenden wird die Erfindung am Beispiel eines Mobilfunksystems nach dem GSM-Standard beschrieben ohne jedoch darauf beschränkt zu sein.

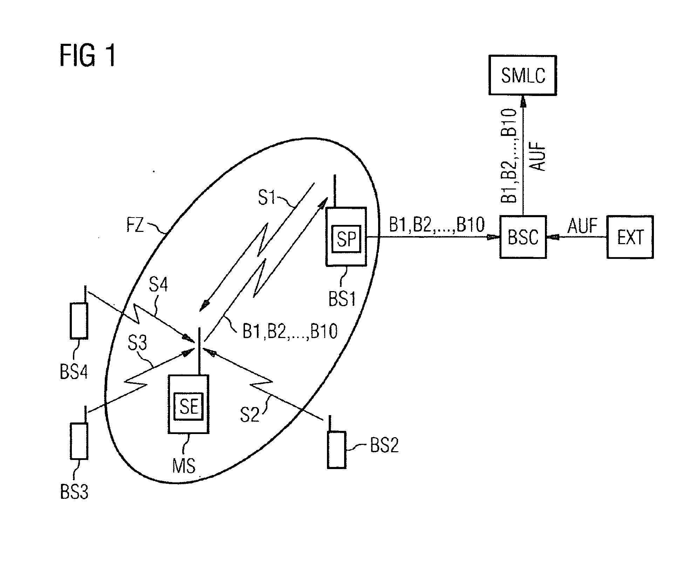

In Figur 1 ist schematisch ein Funkkommunikationssystem dargestellt. Eine erste Basisstation BS1 versorgt eine Funkzelle FZ. Die erste Basisstation BS1 ist mit einem Basisstationscontroller BSC verbunden. Der Basisstationscontroller BSC ist über nicht dargestellte Verbindungen mit einem Kernnetzwerk verbunden. Über dieses nicht dargestellte Kernnetzwerk können externe positionsbestimmende Dienste (LCS: Location Services) eine Aufforderung zur Positionsschätzung einer Teilnehmerstation über den Basisstationscontroller BSC an eine Positionsbestimmungseinheit SMLC senden, die daraufhin die Positionsschätzung für die Teilnehmerstation durchführt.

In der Funkzelle FZ der ersten Basisstation BS1 befindet sich eine Teilnehmerstation MS mit einer Sende- und Empfangseinheit SE zum Senden und Empfangen von Signalen. Unabhängig davon, ob eine Positionsschätzung für die Teilnehmerstation MS durchgeführt wird oder eine Aufforderung zur Positionsschätzung vorliegt, empfängt die Teilnehmerstation MS kontinuierlich erste Empfangssignale S1 von der ersten Basisstation BS1, zweite Empfangssignale S2 von einer zweiten Basisstation BS2, dritte Empfangssignale S3 von einer dritten Basisstation BS3 und vierte Empfangssignale S4 von einer vierten Basisstation BS4 und bestimmt für die vier Empfangssignale S1, S2, S3, S4 jeweils eine Signalstärke, d.h. eine Empfangsleistung der Empfangssignale S1, S2, S3, S4. Die vier Empfangssignale S1, S2, S3, S4 sind beispielsweise Signale von Rundsendekanäle, auf denen die Basisstationen BS1, BS2, BS3 und BS4 beispielsweise Informationen über ihre jeweilige Funkzelle mit einer im Funkkommunikationssystem bekannten und konstanten Sendeleistung aussenden. Die Empfangssignale S1, S2, S3, S4 kann die Teilnehmerstation MS sowohl während einer aktiven Verbindung mit der ersten Basisstation BS1 als auch in einem Wartezustand (Idle Mode) empfangen. Die Teilnehmerstation MS übermittelt Informationen bezüglich der Signalstärken der Empfangssignale S1, S2, S3, S4 in regelmäßigen Abständen beispielsweise alle 480 ms als Berichte B1, B2, B3, B4, B5, B6, B7, B8, B9, B10 an die erste Basisstation BS1. Die erste Basisstation BS1 speichert die von der Teilnehmerstationen MS empfangenen Berichte B1, ..., B10 in einen Speicher SP.

Jeder Bericht B1, ..., B10 enthält wenigstens eine Information bezüglich der Signalstärke eines der vier Empfangssignale S1, S2, S3, S4. Vorzugweise sind in jedem Bericht Informationen bezüglich jedes der vier Empfangssignale S1, S2, S3, S4 enthalten. Die Informationen geben beispielsweise explizit die Signalstärke (Empfangsleistung) des jeweiligen Empfangssignals an oder ermöglichen eine Berechnung der jeweiligen Signalstärke.

Empfängt die Teilnehmerstation MS beispielsweise das erste Empfangssignal S1 der ersten Basisstation BS1 auf einem Verkehrskanal, der über eine Sendeleistungsregelung verfügt, so übermittelt die Teilnehmerstation MS in den Berichten B1, ..., B10 neben einer Information bezüglich der Signalstärke des ersten Empfangssignals S1 auch die zugehörige Sendeleistung, mit der die erste Basisstation BS1 das erste Empfangssignal S1 jeweils ausgesendet hat. Die Sendeleistung des ersten Empfangssignals S1 wird der Teilnehmerstation MS beispielsweise von der ersten Basisstation BS1 mitgeteilt oder kann von der Teilnehmerstation aufgrund der von ihr ermittelten Signaldämpfung von auf dem Rundsendekanal der ersten Basisstation BS1 empfangenen Signalen berechnet werden. Alternativ kann die erste Basisstation BS1 die von der Teilnehmerstation MS empfangenen Berichte B1, ..., B10 selbst um ihre jeweilige Sendeleistung ergänzen. Die Angabe der Sendeleistung des Empfangssignals der ersten Basisstation BS1 in den Berichten B1, ..., B10 ist bei der Verwendung eines Verkehrskanals zweckmäßig, um in Kombination mit der zugehörigen Signalstärke (Emp fangsleistung) des Empfangssignals für eine Positionsschätzung der Teilnehmerstation MS berücksichtigt zu werden.

Der Basisstationscontroller BSC erhält beispielsweise von einer externen Einheit EXT, beispielsweise einem externen positionsbestimmenden Dienst, über das nicht dargestellte Kernnetz eine Aufforderung AUF zur Positionsschätzung der Teilnehmerstation MS. Die Aufforderung AUF leitet der Basisstationscontroller BSC an eine Positionsbestimmungseinheit SMLC weiter. Die Positionsbestimmungseinheit SMLC leitet daraufhin die Positionsschätzung der Teilnehmerstation MS ein und fordert von der ersten Basisstation BS1 beispielsweise zehn Berichte über Signalstärken von Empfangssignalen an. Die erste Basisstation BS1 übermittelt daher nachfolgend zehn Berichte B1, ..., B10, die zum Zeitpunkt der Anforderung durch die Positionsbestimmungseinheit SMLC in ihrem Speicher SP vorhandenen sind, über den Basisstationscontroller BSC an die Positionsbestimmungseinheit SMLC. Durch Vergleich der den Berichten B1, ..., B10 entnehmbaren Signalstärken der Empfangssignale mit einer Signalstärkendatenbank führt die Positionsbestimmungseinheit SMLC eine Positionsschätzung durch und übermittelt die geschätzte Position an die externe Einheit EXT.

In der Signalstärkendatenbank sind beispielsweise für eine Vielzahl von Orten innerhalb der Funkzelle FZ der ersten Basisstation BS1 Signalstärken oder Signaldämpfungen für Signale von der ersten Basisstation BS1 und von benachbarten Basisstationen, beispielsweise von der zweiten, dritten und vierten Basisstation BS2, BS3, BS4, gespeichert. Durch Vergleich der von der Teilnehmerstation MS gemessenen Signalstärken (oder der daraus berechneten Signaldämpfungen) mit der Signalstärkendatenbank wird der Ort mit der besten Übereinstimmung ermittelt und als geschätzte Position festgelegt.

Zusätzlich zu dem Vergleich der den Berichten B1, ..., B10 entnehmbaren Signalstärken mit der Signalstärkendatenbank kann die Positionsbestimmungseinheit SMLC selbstverständlich auch noch weitere Informationen zur Positionsschätzung hinzuziehen. Zu diesen Zusatzinformationen gehören beispielsweise die der der Teilnehmerstation MS zugeordnete Zellidentifikation der ersten Basisstation BS1, in deren Funkzelle FZ die Teilnehmerstation eingebucht ist, oder auch die so genannte Timing Advance, d.h. der Korrekturfaktor, um den die Teilnehmerstation MS ihre Aussendezeitpunkte korrigiert. Die Timing Advance wird der Teilnehmerstation MS von der ersten Basisstation BS1 mitgeteilt. Die erste Basisstation BS1 ermittelt die Timing Advance aus der Rundlaufzeit eines Signals von der ersten Basisstation BS1 zur Teilnehmerstation MS und zurück. Den jeweils aktuellen Wert der Timing Advance kann die erste Basisstation BS1 den von der Teilnehmerstation MS empfangenen Berichten B1, ..., B10 hinzufügen.

Ist, wie in Figur 1 dargestellt, die von der Positionsbestimmungseinheit SMLC angeforderte Anzahl von Berichten zum Zeitpunkt der Aufforderung AUF bereits im Speicher SP der ersten Basisstation BS1 gespeichert, so werden diese unverzüglich der Positionsbestimmungseinheit SMLC zur Verfügung gestellt und eine Positionsbestimmung erfolgt ohne weitere Verzögerung.

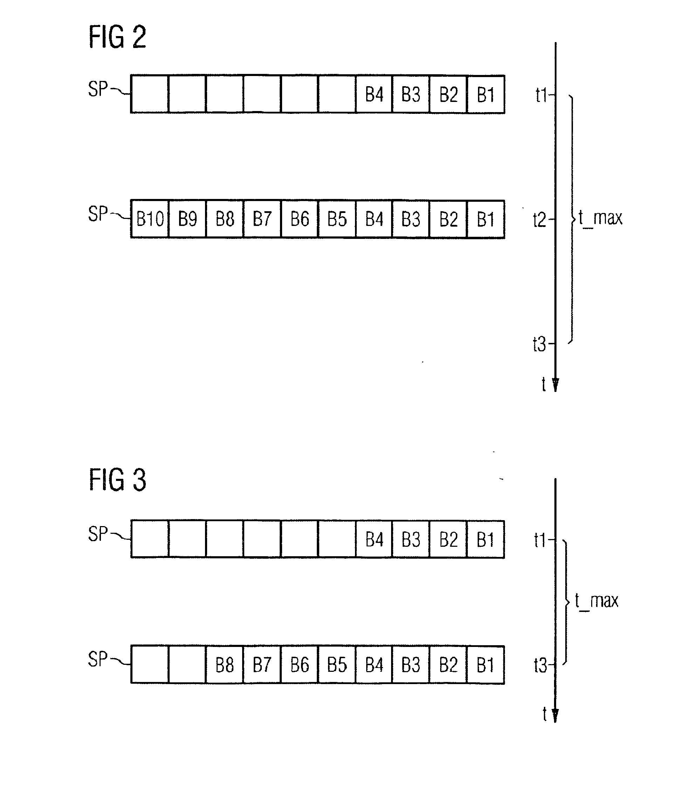

In Figur 2 ist schematisch ein weiteres Ausführungsbeispiel dargestellt, das einen alternativen zeitlichen Ablauf der Belegung des Speichers SP für das in Figur 1 dargestellte Funkkommunikationssystem angibt.

Zu einem ersten Zeitpunkt t1 fordert die Positionsbestimmungseinheit SMLC zehn Berichte von der ersten Basisstation BS1 an. Zu diesem ersten Zeitpunkt t1 sind jedoch erst vier Berichte B1, B2, B3, B4 in dem Speicher SP gespeichert. Die erste Basisstation BS1 wartet daher mit der Übertragung von Berichten an die Positionsbestimmungseinheit SMLC und speichert weiterhin Berichte von der Teilnehmerstation MS. Zu einem zweiten Zeitpunkt t2 sind weitere sechs Berichte B5, B6, B7, B8, B9, B10 bei der ersten Basisstation BS1 eingetroffen und gespeichert worden. Die erste Basisstation BS1 überträgt daraufhin alle zehn Berichte B1, ..., B10 an die Positionsbestimmungseinheit SMLC.

Die Zeitdauer zwischen der Anforderung von zehn Berichten durch die Positionsbestimmungseinheit SMLC und der Lieferung der zehn Berichte B1, ..., B10 von der ersten Basisstation BS1 an die Positionsbestimmungseinheit SMLC ergibt sich aus der Differenz der beiden Zeitpunkte zu t2-t1. In diesem Ausführungsbeispiel ist diese Zeitdauer t2-t1 kleiner als eine maximale Zeitdauer t_max, die zu einem dritten Zeitpunkt t3 abläuft und somit eine Dauer von t3-t1 hat. Die erste Basisstation BS1 kann daher noch vor Ablauf der maximalen Zeitdauer die zehn Berichte B1, ..., B10 an die Positionsbestimmungseinheit SMLC liefern. Die maximale Zeitdauer t_max legt den Zeitraum fest, innerhalb dessen die erste Basisstation BS1 Berichte an die Positionsbestimmungseinheit liefern muss, damit die Gesamtdauer der Positionsschätzung, d. h. die Zeit, die von dem Moment der Aufforderung AUF zur Positionsschätzung bis zur Angabe einer geschätzten Position verstreicht, eine maximale Gesamtdauer nicht überschreitet. Die maximale Zeitdauer t_max wird der ersten Basisstation BS1 beispielsweise von der Positionsbestimmungseinheit SMLC vorgegeben.

In einem in Figur 3 schematisch dargestellten dritten Ausführungsbeispiel sind zum ersten Zeitpunkt t1 vier Berichte B1, B2, B3, B4 im Speicher SP gespeichert. Zum dritten Zeitpunkt t3, d. h. nach Ablauf der maximalen Zeitdauer t_max, sind nur insgesamt acht Berichte B1, ..., B8 in dem Speicher SP gespeichert. In diesem Fall wartet die erste Basisstation BS1 nicht mehr auf weitere Berichte von der Teilnehmerstation MS, um die Gesamtdauer für eine Positionsschätzung nicht zu groß werden zu lassen. Sie liefert daher anstatt zehn Berichten in diesem Ausführungsbeispiel nur acht Berichte an die Positionsbestimmungseinheit SMLC. Dies hat zwar zur Folge, dass die Positionsschätzung durch die Positionsbestimmungseinheit SMLC möglicherweise ungenauer ist, als dies mit zehn Berichten der Fall wäre, die Positionsschätzung erfolgt jedoch auf diese Weise immer innerhalb einer maximalen Gesamtdauer. Die Größe der maximalen Zeitdauer t_max kann von der Positionsbestimmungseinheit SMLC oder einer anderen Netzeinrichtung beispielsweise in Abhängigkeit von der Art des positionsbestimmenden Dienstes festgelegt werden, der die Aufforderung AUF zur Positionsschätzung der Teilnehmerstation MS aussendet.

Selbstverständlich kann eine Aufforderung zur Positionsschätzung der Teilnehmerstation MS nicht nur von der externen Einheit EXT sondern auch vom Funkkommunikationssystem, beispielsweise von der Teilnehmerstation MS, von einer Vermittlungsstelle (MSC: Mobile Switching Center), von einem so genannten Gateway Mobile Location Center (GMLC) oder auch von der Positionsbestimmungseinheit SMLC, erzeugt werden.

Eine weitere Zusatzinformation, die die Positionsbestimmungseinheit SMLC neben der Zellidentifikation der Funkzelle FZ der ersten Basisstation BS1 zu einer verbesserten Positionsschätzung der Teilnehmerstation MS verwenden kann, ist die aktuelle Sendeleistung, mit der die Teilnehmerstation MS jeweils ihre Berichte B1, ..., B10 an die erste Basisstation BS1 sendet, gemeinsam mit der entsprechenden Empfangsleistung der Berichte B1, ..., B10. Diese Zusatzinformation wird den Berich ten B1, ..., B10 der Teilnehmerstation MS beispielsweise von der ersten Basisstation BS1 hinzugefügt.

Bei dem Speicher SP der ersten Basisstation BS1 kann es sich beispielsweise um einen Speicher handeln, der maximal eine Anzahl von zehn Berichten speichert und beim Eintreffen eines elften Berichtes den ersten und somit ältesten Bericht löscht und durch den elften Bericht ersetzt. Auf diese Weise sind in dem Speicher SP immer nur die aktuellsten zehn Berichte gespeichert. Diese maximale Anzahl gespeicherter Berichte entspricht beispielsweise derjenigen Anzahl von Berichten, die von der Positionsbestimmungseinheit SMLC maximal für eine Positionsschätzung angefordert werden. Der Speicher SP kann selbstverständlich außer in der ersten Basisstation BS1 auch in einer anderen Netzeinrichtung des Funkkommunikationssystems angeordnet sein, beispielsweise in dem Basisstationscontroller BSC oder in der Positionsbestimmungseinheit SMLC. Selbstverständlich kann der Speicher SP auch in der Teilnehmerstation MS angeordnet sein. Erst bei einer Anforderung der Berichte werden diese dann über die erste Basisstation BS1 an die Positionsbestimmungseinheit SMLC übertragen.

## Patentansprüche

1. Verfahren zur Positionsschätzung einer Teilnehmerstation (MS) eines Funkkommunikationssystems, bei dem
- eine Empfangsstation (BS1) von der Teilnehmerstation (MS) Berichte (B1, B2, ...,B10) empfängt, die jeweils eine Information bezüglich einer Signalstärke eines Empfangssignals (S1, S2, S3, S4) wenigstens einer sendenden Station (BS1, BS2, BS3, BS4) am Ort der Teilnehmerstation (MS) enthalten,
- die Berichte (B1, B2 , ..., B10) in einem Speicher (SP) einer Netzeinrichtung (BS1) des Funkkommunikationssystems gespeichert werden und
- eine Positionsbestimmungseinheit (SMLC) zumindest zwei gespeicherte Berichte (B1, B2, ..., B10) zur Positionsschätzung der Teilnehmerstation (MS) berücksichtigt,
**dadurch gekennzeichnet,**
**dass** die zumindest zwei Berichte vor einer Aufforderung (AUF) zur Positionsschätzung gespeichert werden.

2. Verfahren nach Anspruch 1, bei dem
als Netzeinrichtung die Empfangsstation verwendet wird.

3. Verfahren nach einem der vorstehenden Ansprüche, bei dem die Berichte (B1, B2, ..., B10) während einer aktiven Verbindung oder in einem Wartezustand der Teilnehmerstation (MS) in bestimmten Zeitabständen regelmäßig empfangen und gespeichert werden.

4. Verfahren nach einem der vorstehenden Ansprüche, bei dem im Speicher (SP) maximal eine erste Anzahl von Berichten (B1, B2 , ..., B10) gespeichert wird.

5. Verfahren nach einem der vorstehenden Ansprüche, bei dem die Positionsbestimmungseinheit (SMLC) eine zweite Anzahl von Berichten (B1, B2, ..., B10) von der Netzeinrichtung (BS1) anfordert.

6. Verfahren nach Anspruch 5, bei dem die Netzeinrichtung (BS1)
- zum Zeitpunkt (t1) der Anforderung eine geringere Anzahl (B1, B2, B3, B4) als die zweite Anzahl von Berichten (B1, B2, ..., B10) gespeichert hat,
- weitere Berichte (B5, ..., B10; B5, ..., B8) speichert bis die zweite Anzahl von Berichten (B1, B2, ..., B10) gespeichert ist oder bis eine maximale Zeitdauer (t_max) abgelaufen ist und
- entweder vor Ablauf der maximalen Zeitdauer (t_max) die zweite Anzahl von Berichten (B1, B2, ..., B10) oder nach Ablauf der maximalen Zeitdauer (t_max) die Anzahl bis dahin gespeicherter Berichte (B1, B2, ..., B8) an die Positionsbestimmungseinheit (SMLC) sendet, selbst wenn die Anzahl gespeicherter Berichte (B1, B2, ..., B8) weiterhin geringer als die zweite Anzahl von Berichten (B1, B2, ..., B10) ist.

7. Verfahren nach einem der vorstehenden Ansprüche, bei dem die Positionsbestimmungseinheit (SMLC) die Positionsschätzung durch einen Vergleich von den Berichten (B1, B2, ..., B10) entnehmbaren Signalstärken mit einer Signalstärkendatenbank durchführt.

8. Verfahren nach einem der vorstehenden Ansprüche, bei dem in den Berichten (B1, B2, ..., B10) zusätzlich die Sendeleistung angegeben wird mit der die wenigstens eine sendende Station (BS1) das Empfangssignal (S1) jeweils gesendet hat.

9. Verfahren nach einem der vorstehenden Ansprüche, bei dem die Berichte (B1, B2, ..., B10) jeweils um die Sendeleistung der Teilnehmerstation (MS) und die entsprechende Empfangsleistung an der die Berichte (B1, B2, ..., B10) empfangenden Empfangsstation (BS1) ergänzt werden.

10. Netzeinrichtung (BS1) für ein Funkkommunikationssystem,
- mit einem Speicher (SP) zum Speichern von Berichten (B1, B2, ..., B10) , die eine Empfangsstation (BS1) von einer Teilnehmerstation (MS) empfangenen hat, wobei die Berichte (B1, B2, ..., B10) jeweils eine Information bezüglich einer Signalstärke eines Empfangssignals (S1, S2, S3, S4) wenigstens einer sendenden Station (BS1, BS2, BS3, BS4) am Ort der Teilnehmerstation (MS) enthalten.
- mit Mitteln zum Übertragen von zumindest zwei gespeicherten Berichten (B1, B2, ..., B10) an eine Positionsbestimmungseinheit (SMLC), wobei die Positionsbestimmungseinheit (SMLC) die zumindest zwei gespeicherten Berichte (B1, B2, ..., B10) zur Positionsschätzung der Teilnehmerstation (MS) berücksichtigt,
**gekennzeichnet durch**,
Mittel zum Steuern.der Netzeinrichtung, so dass die zumindest zwei Berichte vor einer Aufforderung (AUF) zur Positionsschätzung gespeichert werden.

## Claims

1. Method for estimating the position of a subscriber station (MS) of a radio communication system, in which
- a receiving station (BS1) receives from the subscriber station (MS) reports (B1, B2, ..., B10) which in each case contain information with respect to a signal strength of a received signal (S1, S2, S3, S4) of at least one transmitting station (BS1, BS2, BS3, BS4) at the location of the subscriber station (MS),
- the reports (B1, B2, ..., B10) are stored in a memory (SP) of a network device (BS1) of the radio communication system, and
- a position determining unit (SMLC) takes into consideration at least two stored reports (B1, B2, ..., B10) for estimating the position of the subscriber station (MS),
**characterized in that** the at least two reports are stored before a request (AUF) for position estimation.

2. Method according to Claim 1, in which the receiving station is used as the network device.

3. Method according to one of the preceding claims, in which the reports (B1, B2, ..., B10) are regularly received and stored in particular time intervals during an active connection or in a standby state of the subscriber station (MS).

4. Method according to one of the preceding claims, in which a first number of reports (B1, B2, ..., B10) is stored as a maximum in the memory (SP).

5. Method according to one of the preceding claims, in which the position determining unit (SMLC) requests a second number of reports (B1, B2, ..., B10) from the network device (BS1).

6. Method according to Claim 5, in which the network device (BS1)
- has stored a lesser number (B1, B2, B3, B4) than the second number of reports (B1, B2, ..., B10) at the time (t1) of the request,
- stores further reports B5, ..., B10;B5, ..., B8) until the second number of reports (B1, B2, ..., B10) is stored or until a maximum period (t_max) has elapsed, and
- sends to the position determining unit (SMLC) either the second number of reports (B1, B2, ..., B10) before the maximum period (t_max) has elapsed or the number of hitherto stored reports (B1, B2, ..., B8) after the maximum period (t_max) has elapsed, even if the number of stored reports (B1, B2,..., B8) is still less than the second number of reports (B1, B2, ..., B10).

7. Method according to one of the preceding claims, in which the position determining unit (SMLC) carries out the position estimation by comparing signal strengths, which can be found in the reports (B1, B2, ..., B10), with a database of signal strengths.

8. Method according to one of the preceding claims, in which the transmitted power with which the at least one transmitting station (BS1) has in each case transmitted the received signal (S1) is additionally specified in the reports (B1, B2, ..., B10) .

9. Method according to one of the preceding claims, in which the reports (B1, B2, ..., B10) are in each case supplemented by the transmitted power of the subscriber station (MS) and the corresponding received power at the receiving station (BS1) receiving the reports (B1, B2, ..., B10).

10. Network device (BS1) for a radio communication system
- comprising a memory (SP) for storing reports (B1, B2, ..., B10) which a receiving station (BS1) has received from a subscriber station (MS), wherein the reports (B1, B2, ..., B10) in each case contain information with respect to a signal strength of a received signal (S1, S2, S3, S4) of at least one transmitting station (BS1, BS2, BS3, BS4) at the location of the subscriber station (MS),
- comprising means for transmitting at least two stored reports (B1, B2, ..., B10) to a position determining unit (SMLC), wherein the position determining unit (SMLC) takes into consideration the at least two stored reports (B1, B2, ..., B10) for estimating the position of the subscriber station (MS),
**characterized by** means for controlling the network device so that the at least two reports are stored before a request (AUF) for position estimation.

## Revendications

1. Procédé d'évaluation de position d'une station d'abonné (MS) d'un système de radiocommunication, dans lequel
- une station de réception (BS1) reçoit d'une station d'abonné (MS) des rapports (B1, B2, ..., B10) qui contiennent respectivement une information relative à une intensité de signal d'un signal de réception (S1, S2, S3, S4) au moins d'une station émettrice (BS1, BS2, BS3, BS4) se trouvant à l'endroit de la station d'abonné (MS),
- les rapports (B1, B2, ..., B10) sont mémorisés dans une mémoire (SP) d'un dispositif réseau (BS1) du système de radiocommunication et
- une unité de détermination de position (SMLC) tient compte au moins de deux rapports mémorisés (B1, B2, ..., B10) pour l'évaluation de position de la station d'abonné (MS),
**caractérisé en ce**
**que** les au moins deux rapports sont mémorisés avant une demande (AUF) d'évaluation de position.

2. Procédé selon la revendication 1, dans lequel
la station de réception est utilisée en tant que dispositif réseau.

3. Procédé selon l'une quelconque des revendications précédentes, dans lequel
les rapports (B1, B2, ..., B10) sont reçus et mémorisés régulièrement dans des intervalles de temps déterminés pendant une liaison active ou dans un état d'attente de la station d'abonné (MS) .

4. Procédé selon l'une quelconque des revendications précédentes, dans lequel
au maximum un premier nombre de rapports (B1, B2, ..., B10) sont mémorisés dans la mémoire (SP).

5. Procédé selon l'une quelconque des revendications précédentes, dans lequel
l'unité de détermination de position (SMLC) demande au dispositif réseau (BS1) un second nombre de rapports (B1, B2, ..., B10).

6. Procédé selon la revendication 5, dans lequel le dispositif réseau (BS1),
- au moment (t1) de la demande, a mémorisé un nombre plus petit (B1, B2, B3, B4) que le second nombre de rapports (B1, B2, ..., B10),
- mémorise des rapports supplémentaires (B5, ..., B10 ; B5, ..., B8) jusqu'à ce que le second nombre de rapports (B1, B2, ..., B10) soit mémorisé ou jusqu'à ce qu'une durée maximale (t_max) soit écoulée et,
- soit avant l'écoulement de la durée maximale (t_max), émet à l'unité de détermination de position (SMLC) le second nombre de rapports (B1, B2, ..., B10), soit après l'écoulement de la durée maximale (t_max), émet à l'unité de détermination de position (SMLC) le nombre de rapports mémorisés jusqu'alors (B1, B2, ..., B8), même si le nombre de rapports mémorisés (B1, B2, ..., B10) est encore plus petit que le second nombre de rapports (B1, B2, ..., B10).

7. Procédé selon l'une quelconque des revendications précédentes, dans lequel
l'unité de détermination de position (SMLC) réalise, à l'aide d'une banque de données d'intensités de signaux, l'évaluation de position par une comparaison des rapports (B1, B2, ..., B10) d'intensités de signaux prélevables.

8. Procédé selon l'une quelconque des revendications précédentes, dans lequel
la puissance d'émission, avec laquelle l'au moins une station émettrice (BS1) a respectivement émis le signal de réception (S1), est indiquée en plus dans les rapports (B1, B2, ..., B10).

9. Procédé selon l'une quelconque des revendications précédentes, dans lequel
les rapports (B1, B2, ..., B10) sont respectivement complétés de la puissance d'émission de la station d'abonné (MS) et de la puissance de réception correspondante sur la station de réception (BS1) recevant les rapports (B1, B2, ..., B10).

10. Dispositif réseau (BS1) pour un système de radiocommunication
- comprenant une mémoire (SP) destinée à mémoriser des rapports (B1, B2, ..., B10) qu'une station de réception (BS1) a reçu d'une station d'abonné (MS), les rapports (B1, B2, ..., B10) contenant respectivement une information relative à une intensité de signal d'un signal de réception (S1, S2, S3, S4) d'au moins une station émettrice (BS1, VS2, BS3, BS4) se trouvant à l'endroit de la station d'abonné (MS),
- comprenant des moyens destinés à transmettre au moins deux rapports mémorisés (B1, B2, ..., B10) à une unité de détermination de position (SMLC), l'unité de détermination de position (SMLC) tenant compte au moins des deux rapports mémorisés (B1, B2, ..., B10) pour l'évaluation de position de la station d'abonné (MS),
**caractérisé par**
des moyens destinés à commander le dispositif réseau de manière à ce que les au moins deux rapports soient mémorisés avant une demande (AUF) d'évaluation de position.
